# EUROPEAN PATENT SPECIFICATION

(11) **EP 4 299 972 B1**
(45) Date of publication and mention of the grant of the patent: **24.09.2025**
(21) Application number: 22781538.8
(22) Date of filing: 28.03.2022
(51) Int. Cl.: F17C 13/02

(54) **PRESSURE BUILDUP SYSTEM OF CRYOGENIC FLUID STORAGE TANK**
DRUCKAUFBAUSYSTEM FÜR SPEICHERBEHÄLTER FÜR KRYOGENES FLUID
SYSTÈME D'ACCUMULATION DE PRESSION D'UN RÉSERVOIR DE STOCKAGE DE FLUIDE CRYOGÉNIQUE

(30) Priority: 30.03.2021 KR 20210041187
(43) Date of publication of application: 03.01.2024
(73) Proprietor: Hylium Industries, Inc., Seongnam-si, Gyeonggi-do 13488 (KR)
(72) Inventor: KIM, Seo Young, Yongin-si, Gyeonggi-do 17162 (KR)
(74) Representative: Flügel Preissner Schober Seidel
(86) International application number: PCT/KR2022/004338
(87) International publication number: WO 2022/211419

(56) References cited:
- CA-A1- 3 132 878
- FR-A1- 2 951 242
- FR-A1- 3 006 742
- JP-B2- 6 434 762
- KR-A- 20190 134 672
- KR-B1- 101 518 156
- KR-B1- 102 130 703
- KR-B1- 102 130 703
- US-A1- 2015 075 189
- US-B2- 9 746 132

## Description

### Technical Field

The present disclosure relates to a pressure buildup system of a cryogenic fluid storage tank, and more specifically, relates to a pressure buildup system for controlling the internal pressure in a storage tank in which fluid is stored for smooth fuel supply to a supply target (e.g., a fuel cell or a hydrogen vehicle) in a system for supplying (charging) a fuel such as a certain cryogenic fluid (e.g., liquefied hydrogen, etc.). In particular, the present disclosure relates to a technical idea that allows a conventional gravity pressure buildup unit and a conventional non-gravity pressure buildup unit to be selectively implemented as needed in a single pressure buildup system with a simple and efficient structure.

### Background Art

As seriousness of energy problems caused by use of fossil fuels has emerged, research on alternative fuels has been actively conducted.

Among them, a technical idea of using hydrogen as a fuel is in the limelight as an alternative fuel because hydrogen is eco-friendly and highly efficient, and the range of use is expanding not only for hydrogen vehicles that use hydrogen as fuel, but also for small devices such as drones.

Such hydrogen is supplied and stored in a liquefied state, and the liquefied hydrogen is stored in a cryogenic state, and cryogenic fluid such as liquefied hydrogen is stored in a storage tank, and it needs to be properly supplied to a predetermined supply target (e.g., a fuel cell or a hydrogen vehicle).

At this time, in order to smoothly supply a fluid such as liquefied hydrogen from the storage tank, the internal pressure in the storage tank must be maintained at an appropriate level, and when the internal pressure is low, the supply of the fluid itself may not be performed properly.

Accordingly, pressure buildup units for controlling the internal pressure of a storage tank storing such a fluid are known.

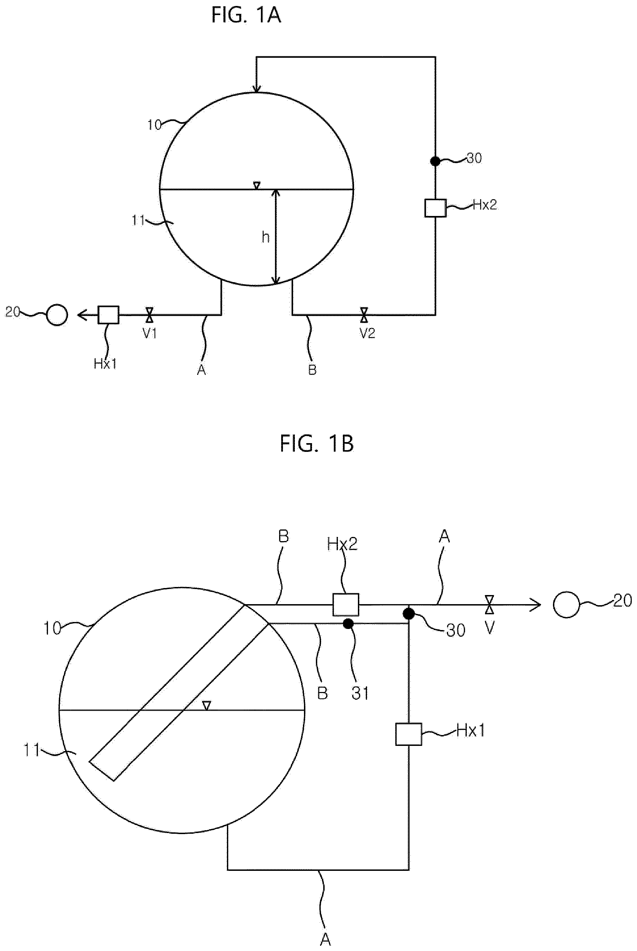

FIG. 1 is a diagram for explaining a conventional pressure buildup system.

First, referring to FIG. 1A, a gravity pressure buildup unit (g-PBU) is shown.

In the gravity pressure buildup unit, cryogenic liquid fuel (hereinafter referred to as fluid) is naturally discharged by gravity through a line connected to the lower end of the storage tank, and in order to increase the initial internal pressure, the valve V2 is opened first, and gaseous fuel vaporized while passing through the heat exchanger HX2 is injected through line B connected to the upper end of the storage tank 10 to increase the internal pressure of the storage tank 10.

Then, when the internal pressure of the storage tank 10 reaches the preset pressure, the fuel may be supplied to the supply target 20 through the line A by opening the valve V1. In addition, it is possible to maintain the set pressure in a state where the valve V2 is opened by using a predetermined automatic pressure control means 30.

In the case of this gravity pressure buildup unit, if the height h of a fluid 11 inside the storage tank 10 is small, the flow rate of the fluid discharged by gravity is small, making it virtually impossible to increase the pressure, and in particular, since the stored fluid 11 is discharged under the influence of gravity, there is a problem in that it cannot be used in mobility such as drones or airplanes when the tilt change is severe or the supply target is overturned.

Unlike the gravity pressure buildup unit, a non-gravity pressure buildup unit (ng-PBU) that is relatively unaffected by gravity is shown in FIG. 1B.

In FIG. 1B, a line A connected to the supply target 20 from the storage tank 10 and a line B branched from the line A to pass through the inside of the storage tank 10 and be connected to the line A again may be formed.

In the non-gravity pressure buildup unit, the fluid 11, i.e., the fuel, is supplied to the supply target 20 while the valve V is open, and when the internal pressure of the storage tank 10 drops below a certain level, the internal pressure of the storage tank 10 may be increased by passing the fuel whose temperature has increased while passing through the heat exchanger HX1 back to the fluid 11 in the storage tank 10 through the line B pipe. Pressure control inside the storage tank 10 may be performed by the pressure control means (e.g., 30 and 31).

Unlike the gravity pressure buildup unit, such a non-gravity pressure buildup unit may be operated even when a supply target is overturned, and thus may be a unit relatively suitable for mobility such as the aforementioned aircraft or drone.

However, in this conventional non-gravity pressure buildup unit, since there is no fluid 11 discharged to line A at the lower end of the storage tank 10 when valve V is closed, there is no way to increase the internal pressure of the storage tank 10, making it difficult to use in practice.

As such, in conventional units, in the initial stage of fluid supply for driving the supply target, waiting time becomes longer because it is virtually impossible to supply the fluid to the supply target until the internal pressure of the storage tank reaches the preset set pressure, so there is a great inconvenience in the use of a device that uses liquefied hydrogen as fuel, and there is a problem in that efficiency is lowered due to problems with each unit.

Therefore, a technical idea of, while supplementing the problems of each unit by selectively operating each unit of gravity type and non-gravity type as needed within one system, simplifying the structure thereof to greatly improve efficiency in manufacturing and use is required.

### [Prior Art Document]

### - Patent Document

Patent Document 1. Korean Patent (Korean Patent No. 10-2021038, "Storage Tank")
CA 3 132 878 A1 discloses a device for storing and for supplying fluid fuel.

FR 3 006 742 A1 discloses a device for filling a tank with a gaseous fuel liquefied at cryogenic temperature, especially for filling cryogenic tanks with liquid hydrogen under pressure.

KR 102 130 703 B1 discloses a liquid hydrogen filling system.

FR 2 951 242 A1 discloses a method of supplying sub-cooled cryogenic liquid from a reservoir to a consumer equipment.

US 9 746 132 B2 discloses a method for cryogenic fluid delivery which utilize pumpless delivery of cryogenic fluid.

### Disclosure of the Invention

### Technical Goals

An object to be achieved by the present disclosure is to provide a technical idea that allows the conventional gravity and non-gravity pressure buildup units to be selectively implemented as needed in a single pressure buildup system with a simple and efficient structure.

### Technical Solutions

The invention is set out in the appended claims.

A pressure buildup system according to an embodiment of the present disclosure for achieving the above technical object may include a storage tank in which cryogenic fluid is stored, a discharge line communicating with a lower part of the storage tank so that the stored fluid flows, a first line branched from the discharge line and having one end connected to an upper part of the storage tank to perform gravity pressure buildup, a second line branched from the discharge line and having one end connected to a supply target, and a third line having one end branched from a first point of the second line and the other end formed to be connected to the second line at a second point outside the storage tank after a part passes inside the fluid stored in the storage tank to perform non-gravity pressure buildup.

In addition, the pressure buildup system of the cryogenic fluid storage tank may include a controller configured to control a flow of the fluid in each line according to an internal pressure of the storage tank, wherein the controller may be configured to allow the fluid to pass through the first line until the internal pressure of the storage tank reaches a preset set pressure, and when the internal pressure of the storage tank reaches the set pressure, control the fluid to be supplied to the supply target through the second line or the third line.

In addition, the pressure buildup system of the cryogenic fluid storage tank may include a first valve formed in the first line to control the fluid flow to the first line, and a second valve formed in the second line to control the fluid flow to the second line, and the controller may be configured to control an operation of at least one of the first valve or the second valve, wherein the controller may be configured to open the first valve until the internal pressure of the storage tank reaches a preset set pressure so that the fluid passes through the first line, when the internal pressure of the storage tank reaches the set pressure, open the second valve after closing the first valve so that the fluid is supplied to the supply target through the second line, and when the internal pressure of the storage tank decreases below a predetermined level while the second valve is open, allow the fluid to be supplied to the supply target through the third line.

In addition, the pressure buildup system may include a first heat exchanger formed in the first line, a second heat exchanger formed at a location before the third line is branched from the second line, and a third heat exchanger formed at a location before being connected to the supply target in the third line, so that a temperature of the fluid passing through the first heat exchanger, the second heat exchanger, or the third heat exchanger may increase.

A pressure buildup system of a cryogenic fluid storage tank according to another embodiment of the present disclosure for achieving the above technical object may include a storage tank in which cryogenic fluid is stored, a discharge line communicating with a lower part of the storage tank so that the stored fluid flows, a first line having one end connected to the discharge line and the other end connected to a supply target, a second line branched from the first line at a third point to communicate with an inside of the storage tank to perform gravity pressure buildup, and a third line branched from the first line at a fourth point and having one end formed to be connected at a fifth point of the first line outside the storage tank after a part passes inside the fluid stored in the storage tank to perform non-gravity pressure buildup.

In addition, the pressure buildup system of the cryogenic fluid storage tank may include a controller configured to control a flow of the fluid in each line according to an internal pressure of the storage tank, wherein the controller may be configured to allow the fluid to pass through the second line until the internal pressure of the storage tank reaches a preset set pressure, and when the internal pressure of the storage tank reaches the set pressure, close a flow to the second line and control the fluid to be supplied to the supply target through the first line or the third line.

In addition, the pressure buildup system of the cryogenic fluid storage tank may include a first valve formed in the second line to control the fluid flow to the second line, and a second valve formed at a rear end side of the first line to control the fluid flow to the first line, and the controller may be configured to control an operation of at least one of the first valve or the second valve according to the internal pressure of the storage tank, wherein the controller may be configured to open the first valve until the internal pressure of the storage tank reaches a preset set pressure so that the fluid passes through the second line, when the internal pressure of the storage tank reaches the set pressure, open the second valve after closing the first valve so that the fluid is supplied to the supply target through the first line, and when the internal pressure of the storage tank decreases below a predetermined level while the second valve is open, allow the fluid to be supplied to the supply target through the third line.

In addition, the pressure buildup system of the cryogenic fluid storage tank may include a first heat exchanger formed at a location before the second line or the third line is branched from the first line, and a second heat exchanger formed at a location before the third line branched from the first line is reconnected to the first line, so that a temperature of the fluid passing through the first heat exchanger or the second heat exchanger may increase.

A pressure buildup system of a cryogenic fluid storage tank according to another embodiment of the present disclosure for achieving the above technical object may include a storage tank in which cryogenic fluid is stored, a discharge line communicating with a lower part of the storage tank so that the stored fluid flows, a first line having one end connected to the discharge line and the other end connected to a supply target, a second line branched from the first line at a sixth point and having one end formed to be connected at a seventh point of the first line outside the storage tank after a part passes inside the fluid stored in the storage tank to perform non-gravity pressure buildup, and a third line branched from the second line at an eighth point to communicate with an inside of the storage tank to perform gravity pressure buildup.

In addition, the pressure buildup system of the cryogenic fluid storage tank may include a controller configured to control a flow of the fluid in each line according to an internal pressure of the storage tank, wherein the controller may be configured to allow the fluid to pass through the third line until the internal pressure of the storage tank reaches a preset set pressure, and when the internal pressure of the storage tank reaches the set pressure, control the fluid to be supplied to the supply target through the first line or the second line.

In addition, the pressure buildup system of the cryogenic fluid storage tank may include a first valve formed in the third line to control the fluid flow to the third line, and a second valve formed at a rear end side of the first line to control the supply of the fluid to the supply target, wherein the controller may be configured to, while controlling an operation of at least one of the first valve or the second valve according to the internal pressure of the storage tank, open the first valve until the internal pressure of the storage tank reaches a preset set pressure so that the fluid passes through the third line, when the internal pressure of the storage tank reaches the set pressure, open the second valve after closing the first valve so that the fluid is supplied to the supply target through the first line, and when the internal pressure of the storage tank decreases below a predetermined level while the second valve is open, allow the fluid to be supplied to the supply target through the second line.

In addition, the pressure buildup system may include a first heat exchanger formed at a location before the second line is branched from the first line, and a second heat exchanger formed at a location before being connected to the supply target in the second line, so that a temperature of the fluid passing through the first heat exchanger or the second heat exchanger may increase.

### Advantageous Effects

According to an embodiment of the present disclosure, by selectively implementing the conventional gravity and non-gravity pressure buildup units as needed with a simple and efficient structure in one pressure buildup system, it may substantially have the effect of increasing the capacity of the pressure buildup system (gravity type + non-gravity type), and since the initial pressure inside the storage tank in which fluid such as liquefied hydrogen is stored may be raised relatively quickly, there is an effect that the waiting time for fuel (e.g., liquefied hydrogen) supply may be remarkably reduced.

### Brief Description of Drawings

In order to more fully understand the drawings cited in the detailed description of the present disclosure, a brief description of each drawing is provided.
FIG. 1 is a diagram for explaining a conventional pressure buildup system.
FIG. 2 illustrates a schematic structure of a pressure buildup system of a cryogenic fluid storage tank according to an embodiment of the present disclosure.
FIG. 3 illustrates a schematic structure of a pressure buildup system of a cryogenic fluid storage tank according to another embodiment of the present disclosure.
FIG. 4 illustrates a schematic structure of a pressure buildup system of a cryogenic fluid storage tank according to another embodiment of the present disclosure.

### Best Mode for Carrying Out the Invention

Since the present disclosure may apply various transformations and have various embodiments, specific embodiments will be illustrated in the drawings and described in detail in the detailed description. However, this is not intended to limit the present disclosure to specific embodiments, and it should be understood to include all transformations, equivalents and substitutes included in the scope of the present disclosure. In describing the present invention, if it is determined that a detailed description of related known technologies may obscure the gist of the present disclosure, the detailed description will be omitted.

Terms such as first and second may be used to describe various components, but the components should not be limited by the terms. The terms are used only for the purpose of distinguishing one component from another.

The terms used in the present application are used only to describe a particular embodiment and are not intended to limit the present disclosure. Singular expressions include plural expressions unless the context clearly means otherwise.

In this specification, terms such as "include" or "have" are intended to designate the presence of features, numbers, steps, operations, components, parts, or combinations thereof described in the specification, and it should be understood that it does not preclude the possibility of the presence or addition of one or more other features, numbers, steps, operations, components, parts, or combinations thereof.

Hereinafter, with reference to the accompanying drawings, the present disclosure will be described in detail centering on embodiments of the present disclosure. Like reference numerals in each figure indicate like members.

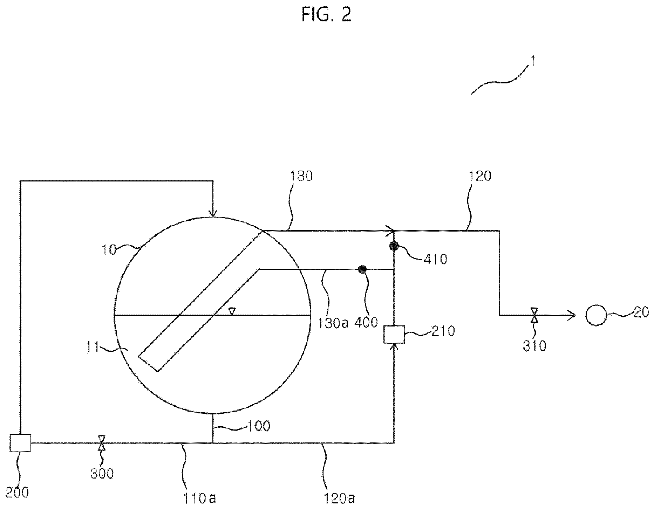

FIG. 2 illustrates a schematic structure of a pressure buildup system of a cryogenic fluid storage tank according to an embodiment of the present disclosure.

Referring to FIG. 2, a pressure buildup system (1, hereinafter referred to as the pressure buildup system) of a cryogenic fluid storage tank according to an embodiment of the present disclosure may include a storage tank 10 in which cryogenic fluid 11 is stored, a discharge line 100 communicating with a lower part of the storage tank 10 so that the stored fluid flows, a first line 110a branched from the discharge line 100 and having one end connected to an upper part of the storage tank 10 to perform gravity pressure buildup, a second line 120a branched from the discharge line 100 and having one end connected to a supply target 20, and a third line 130a having one end branched from a first point of the second line 120a and the other end formed to be connected to the second line 120a at a second point outside the storage tank 10 after a part passes inside of the fluid 11 stored in the storage tank 10 to perform non-gravity pressure buildup. The first point may refer to a location relatively close to the discharge line 100 compared to the second point. In addition, as will be described later, when a heat exchanger (e.g., 210) is provided in the second line 120a, the first point and the second point may be located after, from the discharge line 100, the second line 120a passes through the heat exchanger (e.g., 210) .

In addition, the pressure buildup system 1 may include a first valve 300 formed in the first line 110a to control the fluid 11 flow to the first line 110a, and a second valve 310 formed in the second line 120a to control the fluid flow to the second line 120a, and a controller (i.e., 420) configured to control an operation of the first valve 300 according to the internal pressure of the storage tank 10 and a controller (e.g., 400, 410) configured to control an operation of the second valve 310.

The controller (e.g., 400, 410, 420) may refer to a device or system capable of opening or closing the valves and/or respective lines so that the fluid 11 passes through a specific line according to the internal pressure of the storage tank 10.

For example, the controller (e.g., 400, 410) may be formed to have a mechanical configuration capable of automatically operating when the internal pressure of the storage tank 10 reaches a specific pressure, and depending on the implementation example, it may be formed to have an electronic configuration including a predetermined sensor for sensing the internal pressure of the storage tank 10 and operating according to the pressure value sensed by the sensor. In any case, the controller (e.g., 400, 410) may be implemented to control (e.g., opening/closing of valves and/or lines) a line through which the fluid 11 passes according to the internal pressure of the storage tank 10.

The pressure buildup unit by the pressure buildup system 1 according to the technical idea of the present disclosure will be described as follows.

The pressure buildup system 1 may efficiently increase the initial pressure in the storage tank 10 in the same way as the conventional gravity pressure buildup unit described above at the beginning of operation. For example, the pressure buildup system 1 may open the first valve 300 until the internal pressure of the storage tank 10 reaches a preset set pressure (e.g., 11 bar, the set pressure may be set variously as needed by factors such as the type of fluid 11 or the capacity of the storage tank 10) to allow the fluid to circulate through the first line 110a. The control of the first valve 300 may be performed by the controlller (e.g., 420). In this case, the second valve 310 may be closed.

And when the internal pressure of the storage tank 10 reaches the set pressure, the controller (e.g., 400, 410) closes the first valve 300 and then opens the second valve 310 so that the fluid 11 may be supplied to the supply target 20 through the second line 120a.

In the present specification, the supply target 20 may be a predetermined target that needs supply or charging of the fluid stored in the storage tank 10.

In an embodiment, when the cryogenic fluid 11 stored in the storage tank 10 is liquefied hydrogen, the supply target 20 may mean a fuel cell using hydrogen as fuel or a hydrogen vehicle directly using hydrogen as fuel. When the fluid 11 is of a different type than liquefied hydrogen, targets that require charging of the corresponding fluid 11 may be the supply target 20. Hereinafter, in the present specification, a case in which the fluid 11 is liquefied hydrogen and the supply target 20 is a fuel cell or a hydrogen vehicle requiring charging (supply) of hydrogen is described as an example, but the present disclosure is not necessarily limited thereto.

In addition, when the fluid 11 is supplied to the supply target 20 and/or the storage tank 10 or the like, it may mean a case in which the fluid 11 is directly supplied to the supply target 20 in a state of the fluid 11, and as will be described later, it may mean a case of being supplied in a state of being vaporized or a state where the temperature has risen through certain other components (e.g., heat exchanger, etc.).

Meanwhile, while the second valve 310 is open and the fluid 11 is supplied to the supply target 20 through the second line 120a, as the amount of the fluid 11 stored in the storage tank 10 decreases, the internal pressure of the storage tank 10 may decrease to a pressure required for supply to the supply target 20 or less. In this case, the controller (e.g., 400, 410) may allow the fluid 11 to be not directly supplied to the supply target 20 only through the second line 120a, but to be supplied to the supply target 20 after passing through the third line 130a. As shown in the drawing, the third line 130a passes inside the storage tank 10 and may be formed to meet (connect) with the second line 120a again outside the storage tank 10. In addition, the third line 130a is formed to pass through the inside of the fluid 11 stored in the storage tank 10, and by a part of the third line 130a passing through the inside of the storage tank 10, the temperature of the fluid 11 inside the storage tank 10 is raised, and the internal pressure of the storage tank 10 may increase again. In addition, the third line 130a may be connected to the second line 120a again to supply the fluid 11 to the supply target 20. At this time, the first valve 300 may still remain closed.

Then, when the internal pressure of the storage tank 10 reaches the set pressure, the controller (e.g., 400, 410) may be implemented so that the fluid 11 may be directly supplied to the supply target 20 without passing through the third line 130a.

Meanwhile, in general, when a predetermined gas such as liquefied hydrogen is liquefied and stored, the temperature of the liquefied fluid 11 may need to be maintained at a cryogenic temperature. In order to supply the cryogenic fluid 11 to the supply target 20 or to inject it into the storage tank 10 to increase the internal pressure of the storage tank 10 like the first line 110, it is necessary to increase the temperature of the fluid 11. To this end, the pressure buildup system 1 may further include at least one heat exchanger (e.g., 200, 210, 220).

In the embodiment shown in FIG. 2, at least one heat exchanger (e.g., 200, 210, 220) may be provided in the first line 110a, the second line 120a, and the third line 130a, respectively.

Among the at least one heat exchanger, the first heat exchanger 200 is located after the first valve 300 of the first line 110a, and may be formed so that heat exchange is performed when the fluid 11 discharged through the discharge line 100 passes through the first line 110a when the first valve 300 is opened. As such, the fluid 11 passing through the first heat exchanger 200 in the first line 110a is vaporized and injected back into the storage tank 10, thereby increasing the internal pressure of the storage tank 10.

In addition, the second heat exchanger 210 is provided in the second line 120a, and may be formed so that heat exchange with respect to the fluid 11 supplied to the supply target 20 is performed.

The third line 130a may be formed to be branched after the second heat exchanger 210 on the second line 120a, and as described above, pass through the inside of the storage tank 10 and then meet the second line 120a again. In addition, the third heat exchanger 220 may be formed at a location after the third line 130a passes inside the storage tank 10 and before it meets the second line 120a again outside the storage tank 10, and through this, heat exchange may be performed so that the fluid 11 passing through the third line 130a may be smoothly supplied to the supply target 20.

According to the technical idea of the present disclosure, in one pressure buildup system 1, the conventional gravity and non-gravity pressure buildup units may be selectively implemented as needed with a simple and efficient structure. Through this, the present disclosure may substantially have the effect of increasing the capacity of the pressure buildup system 1 (gravity type + non-gravity type), and since the initial internal pressure of the storage tank 10 may be raised relatively quickly, there is an effect that the waiting time for fuel (e.g., liquefied hydrogen) charging may be remarkably reduced.

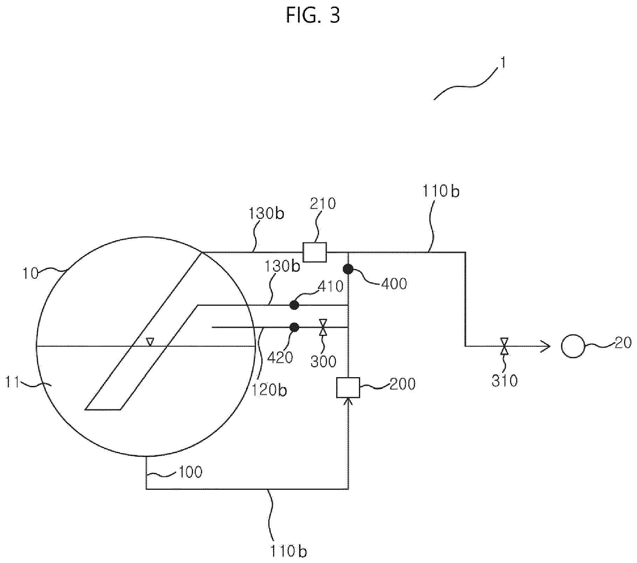

FIG. 3 illustrates a schematic structure of a pressure buildup system of a cryogenic fluid storage tank according to another embodiment of the present disclosure.

Referring to FIG. 3, the pressure buildup system 1 according to another embodiment of the present disclosure may include a storage tank 10 in which cryogenic fluid 11 is stored, a discharge line 100 communicating with a lower part of the storage tank 10 so that the stored fluid flows, and a first line 110b having one end connected to the discharge line 100 and the other end connected to a supply target 20. In addition, the pressure buildup system 1 may include a second line 120b branched from the first line 110b at a third point to communicate with an upper empty space of the storage tank 10 to perform gravity pressure buildup, and a third line 130b branched from the first line 110b at a fourth point and having one end formed to be connected at a fifth point of the first line 110b outside the storage tank 10 after a part passes inside the fluid 11 stored in the storage tank 10 to perform non-gravity pressure buildup.

The third point may refer to a location relatively close to the discharge line 100 compared to the fourth point. In other words, in the embodiment of FIG. 3, the second line 120b branches first from the first line 110b compared to the third line 130b, and the third line 130b may be branched at a location after the second line 120b is branched. A fifth point where the third line 130b is again connected to the first line 110b may refer to a location after the third point and the fourth point. In addition, when a heat exchanger (e.g., 200) is provided in the first line 110b, the third point and the fourth point may be located after the heat exchanger (e.g., 200) from the discharge line 100.

The pressure buildup system 1 according to another embodiment of the present disclosure shown in FIG. 3 is characterized in that, compared to the embodiment described above in FIG. 2, a line capable of increasing the internal pressure of the storage tank 10 in a gravity pressure buildup unit is branched from the first line 110b without being separately branched from the discharge line 100.

This may make it possible to have a relatively simple structure compared to the embodiment described above in FIG. 2. For example, the pressure buildup system 1 according to another embodiment of the present disclosure shown in FIG. 3 eliminates the need for a separate heat exchanger (e.g., the first heat exchanger 200 of FIG. 2) for the gravity pressure buildup unit, so the number of required heat exchangers may be reduced.

As shown in the drawing, in the case of the second line 120b for gravity pressure buildup, it may branch at a location after the first heat exchanger 200 provided in the first line 110b.

In addition, a first valve 300 for controlling the inflow of the fluid 11 into the second line 120b may be formed in the second line 120b, and initially, in a state where the first valve 300 is open and the second valve 310 formed at the rear end side of the first line 110b is closed, the fluid 11 discharged through the discharge line 100 from the storage tank 10 may be vaporized and injected into the storage tank 10 through the first heat exchanger 200 and the second line 120b to increase the internal pressure of the storage tank 10.

Then, when the internal pressure of the storage tank 10 reaches the preset set pressure, while the first valve 300 is closed and the second valve 310 is opened, the fluid 11 may be vaporized and supplied to the supply target 20 through the first line 110b.

When the internal pressure of the storage tank 10 drops while the fluid 11 is supplied to the supply target 20, the controller (e.g., 400, 410) may allow the fluid 11 to pass through the third line 130b.

This is a configuration in which non-gravity pressure buildup may be performed through the third line 130b in the same manner as described above in FIG. 2, and while passing the cryogenic fluid 11 stored in the storage tank 10, the temperature of the lowered fluid 11 may be raised again through the second heat exchanger 210 and supply to the supply target 20 may be performed.

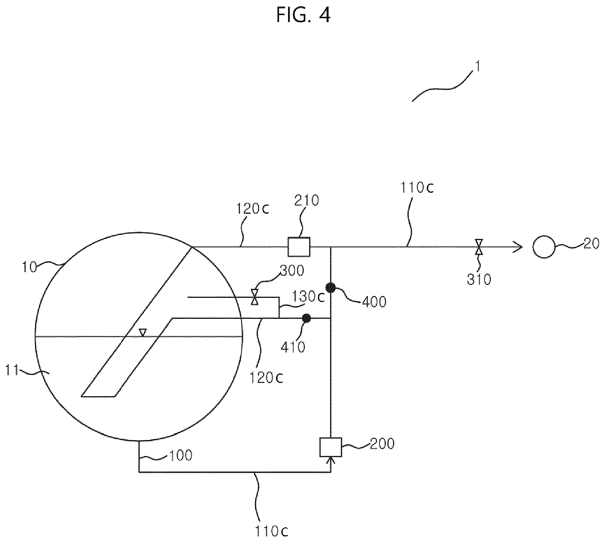

FIG. 4 illustrates a schematic structure of a pressure buildup system of a cryogenic fluid storage tank according to another embodiment of the present disclosure.

Referring to FIG. 4, the pressure buildup system 1 according to another embodiment of the present disclosure may include a storage tank 10 in which cryogenic fluid 11 is stored, a discharge line 100 communicating with a lower part of the storage tank 10 so that the stored fluid flows, and a first line 110c having one end connected to the discharge line 100 and the other end connected to a supply target 20. In addition, the pressure buildup system 1 may include a second line 120 c formed to be branched from the first line 110c at a sixth point so that the non-gravity pressure buildup described above in FIGS. 2 and/or 3 may be achieved, having one end connected again to the seventh point of the first line 110c outside of the storage tank 10, and a third line 120c branched from the second line 120c at a eighth point to communicate with an upper empty space of the storage tank 10 to perform gravity pressure buildup.

The sixth point may refer to a location relatively close to the discharge line 100 compared to the seventh point. In other words, in the embodiment of FIG. 4, the second line 120c may be first branched (sixth point) from the first line 110c, and reconnected to the first line 110c at a location after the sixth point (seventh point) through a non-gravity pressure buildup process. In addition, when a heat exchanger (e.g., 200) is provided in the first line 110c, the sixth point and the seventh point may be located after the heat exchanger (e.g., 200) from the discharge line 100.

In addition, the pressure buildup system 1 according to another embodiment of the present disclosure is the same in that a separate line for gravity pressure buildup is not branched from the discharge line 100 as shown in the pressure buildup system 1 according to another embodiment of the present disclosure described in FIG. 3, but unlike the embodiment in FIG. 3, there is a difference in that the line for gravity pressure buildup (i.e., the third line 120c in FIG. 4) is branched from the line for non-gravity pressure buildup (i.e., the second line 120c in FIG. 4) at the eighth point. The eighth point may be an arbitrary location divided for convenience of description, but preferably, it may mean between the sixth point, i.e., a location after the second line 120c is branched from the first line 110c and a location before the second line 120c enters the storage tank 10. In other words, according to the technical idea of the present disclosure, after the fluid 11 that has passed through the heat exchanger (e.g., 200) in the first line 110c is directed to the second line 120c at the sixth point, and non-gravity pressure buildup may be performed while passing through the second line 120c as needed, or gravity pressure buildup may be performed while passing through the third line 130c.

In any case, according to the technical idea of the present disclosure, as a line for non-gravity pressure buildup is formed inside the storage tank 10, at the beginning of the operation, a line capable of quickly increasing the initial pressure through gravity pressure buildup is formed together, so it may have a feature that may selectively use gravity and non-gravity pressure buildup units with a relatively simple structure.

In the pressure buildup system 1 according to another embodiment of the present disclosure shown in FIG. 4, the heat exchanger may be formed at the same or similar location as the location described above in FIG. 3. For example, in the embodiment of FIG. 4, the first heat exchanger 200 may be formed at the front end of the first line 110c, and the second heat exchanger 210 may be formed at the rear end of the second line 120c, i.e., a line where non-gravity pressure buildup is performed.

The foregoing description of the present disclosure is for illustrative purposes only, and those skilled in the art to which the present disclosure pertains will understand that it can be easily modified into other specific forms without changing the technical idea or essential characteristics of the present disclosure. Therefore, the embodiments described above should be understood as illustrative in all respects and not limiting. For example, each component described as a single type may be implemented in a distributed manner, and similarly, components described as distributed may be implemented in a combined form.

The scope of the present disclosure is indicated by the following claims rather than the detailed description above, and all changes or modifications derived from the meaning and scope of the claims should be construed as being included in the scope of the present disclosure.

### Industrial Applicability

The present disclosure may be used in a pressure buildup system of a cryogenic fluid storage tank.

## Claims

1. A pressure buildup system (1) of a cryogenic fluid (11) storage tank (10), the pressure buildup system (1) comprising:
a storage tank (10) in which cryogenic fluid (11) is stored;
a discharge line (100) communicating with a lower part of the storage tank (10) so that the stored fluid (11) flows;
a first line (110, 110a, 110b, 110c) branched from the discharge line (100) and having one end connected to an upper part of the storage tank (10) to perform gravity pressure buildup;
a second line (120, 120a, 120b, 120c) branched from the discharge line (100) and having one end connected to a supply target (20); and
a third line (130a, 130b, 130c) having one end branched from a first point of the second line (120, 120a, 120b, 120c) and the other end formed to be connected to the second line (120, 120a, 120b, 120c) at a second point outside the storage tank (10) after a part passes inside the fluid (11) stored in the storage tank (10) to perform non-gravity pressure buildup.

2. The pressure buildup system (1) of claim 1, wherein the pressure buildup system (1) of the cryogenic fluid (11) storage tank (10) comprises a controller (400, 410) configured to control a flow of the fluid (11) in each line according to an internal pressure of the storage tank (10);
wherein the controller (400, 410) is configured to allow the fluid (11) to pass through the first line (110, 110a, 110b, 110c) until the internal pressure of the storage tank (10) reaches a preset set pressure, and
when the internal pressure of the storage tank (10) reaches the set pressure, control the fluid (11) to be supplied to the supply target (20) through the second line (120, 120a, 120b, 120c) or the third line (130a, 130b, 130c).

3. The pressure buildup system (1) of claim 2, wherein the pressure buildup system (1) of the cryogenic fluid (11) storage tank (10) comprises:
a first valve (300) formed in the first line (110, 110a, 110b, 110c) to control the fluid (11) flow to the first line (110, 110a, 110b, 110c); and
a second valve (310) formed in the second line (120, 120a, 120b, 120c) to control the fluid (11) flow to the second line (120, 120a, 120b, 120c); and
the controller (400, 410) is configured to control an operation of at least one of the first valve (300) or the second valve (310);
wherein the controller (400, 410) is configured to open the first valve (300) until the internal pressure of the storage tank (10) reaches a preset set pressure so that the fluid (11) passes through the first line (110, 110a, 110b, 110c),
when the internal pressure of the storage tank (10) reaches the set pressure, open the second valve (310) after closing the first valve (300) so that the fluid (11) is supplied to the supply target (20) through the second line (120, 120a, 120b, 120c), and
when the internal pressure of the storage tank (10) decreases below a predetermined level while the second valve (310) is open, allow the fluid (11) to be supplied to the supply target (20) through the third line (130a, 130b, 130c).

4. The pressure buildup system (1) of any one of claims 1 to 3, wherein the pressure buildup system (1) of the cryogenic fluid (11) storage tank (10) comprises:
a first heat exchanger (200) formed in the first line (110, 110a, 110b, 110c);
a second heat exchanger (210) formed at a location before the third line (130a, 130b, 130c) is branched from the second line (120, 120a, 120b, 120c); and
a third heat exchanger (220) formed at a location before being connected to the supply target (20) in the third line (130a, 130b, 130c),
so that a temperature of the fluid (11) passing through the first heat exchanger (200), the second heat exchanger (210), or the third heat exchanger (220) increases.

5. A pressure buildup system (1) of a cryogenic fluid (11) storage tank (10), the pressure buildup system (1) comprising:
a storage tank (10) in which cryogenic fluid (11) is stored;
a discharge line (100) communicating with a lower part of the storage tank (10) so that the stored fluid (11) flows;
a first line (110, 110a, 110b, 110c) having one end connected to the discharge line (100) and the other end connected to a supply target (20);
a second line (120, 120a, 120b, 120c) branched from the first line (110, 110a, 110b, 110c) at a third point to communicate with an inside of the storage tank (10) to perform gravity pressure buildup; and
a third line (130a, 130b, 130c) branched from the first line (110, 110a, 110b, 110c) at a fourth point and having one end formed to be connected at a fifth point of the first line (110, 110a, 110b, 110c) outside the storage tank (10) after a part passes inside the fluid (11) stored in the storage tank (10) to perform non-gravity pressure buildup.

6. The pressure buildup system (1) of claim 5, wherein the pressure buildup system (1) of the cryogenic fluid (11) storage tank (10) comprises:
a controller (400, 410) configured to control a flow of the fluid (11) in each line according to an internal pressure of the storage tank (10);
wherein the controller (400, 410) is configured to allow the fluid (11) to pass through the second line (120, 120a, 120b, 120c) until the internal pressure of the storage tank (10) reaches a preset set pressure, and
when the internal pressure of the storage tank (10) reaches the set pressure, close a flow to the second line (120, 120a, 120b, 120c) and control the fluid (11) to be supplied to the supply target (20) through the first line (110, 110a, 110b, 110c) or the third line (130a, 130b, 130c).

7. The pressure buildup system (1) of claim 6, wherein the pressure buildup system (1) of the cryogenic fluid (11) storage tank (10) comprises:
a first valve (300) formed in the second line (120, 120a, 120b, 120c) to control the fluid (11) flow to the second line (120, 120a, 120b, 120c); and
a second valve (310) formed at a rear end side of the first line (110, 110a, 110b, 110c) to control the fluid (11) flow to the first line (110, 110a, 110b, 110c); and
the controller (400, 410) is configured to control an operation of at least one of the first valve (300) or the second valve (310) according to the internal pressure of the storage tank (10);
wherein the controller (400, 410) is configured to open the first valve (300) until the internal pressure of the storage tank (10) reaches a preset set pressure so that the fluid (11) passes through the second line (120, 120a, 120b, 120c),
when the internal pressure of the storage tank (10) reaches the set pressure, open the second valve (310) after closing the first valve (300) so that the fluid (11) is supplied to the supply target (20) through the first line (110, 110a, 110b, 110c), and
when the internal pressure of the storage tank (10) decreases below a predetermined level while the second valve (310) is open, allow the fluid (11) to be supplied to the supply target (20) through the third line (130a, 130b, 130c).

8. The pressure buildup system (1) of any one of claims 5 to 7, wherein the pressure buildup system (1) of the cryogenic fluid (11) storage tank (10) comprises:
a first heat exchanger (200) formed at a location before the second line (120, 120a, 120b, 120c) or the third line (130a, 130b, 130c) is branched from the first line (110, 110a, 110b, 110c); and
a second heat exchanger (210) formed at a location before the third line (130a, 130b, 130c) branched from the first line (110, 110a, 110b, 110c) is reconnected to the first line (110, 110a, 110b, 110c),
so that a temperature of the fluid (11) passing through the first heat exchanger (200) or the second heat exchanger (210) increases.

9. A pressure buildup system (1) of a cryogenic fluid (11) storage tank (10), the pressure buildup system (1) comprising:
a storage tank (10) in which cryogenic fluid (11) is stored;
a discharge line (100) communicating with a lower part of the storage tank (10) so that the stored fluid (11) flows;
a first line (110, 110a, 110b, 110c) having one end connected to the discharge line (100) and the other end connected to a supply target (20);
a second line (120, 120a, 120b, 120c) branched from the first line (110, 110a, 110b, 110c) at a sixth point and having one end formed to be connected at a seventh point of the first line (110, 110a, 110b, 110c) outside the storage tank (10) after a part passes inside the fluid (11) stored in the storage tank (10) to perform non-gravity pressure buildup; and
a third line (130a, 130b, 130c) branched from the second line (120, 120a, 120b, 120c) at an eighth point to communicate with an inside of the storage tank (10) to perform gravity pressure buildup.

10. The pressure buildup system (1) of claim 9, wherein the pressure buildup system (1) of the cryogenic fluid (11) storage tank (10) comprises:
a controller (400, 410) configured to control a flow of the fluid (11) in each line according to an internal pressure of the storage tank (10);
wherein the controller (400, 410) is configured to allow the fluid (11) to pass through the third line (120c, 130a, 130b, 130c) until the internal pressure of the storage tank (10) reaches a preset set pressure, and
when the internal pressure of the storage tank (10) reaches the set pressure, control the fluid (11) to be supplied to the supply target (20) through the first line (110, 110a, 110b, 110c) or the second line (120, 120a, 120b, 120c).

11. The pressure buildup system (1) of claim 10, wherein the pressure buildup system (1) of the cryogenic fluid (11) storage tank (10) comprises:
a first valve (300) formed in the third line (120c, 130a, 130b, 130c) to control the fluid (11) flow to the third line (120c, 130a, 130b, 130c); and
a second valve (310) formed at a rear end side of the first line (110, 110a, 110b, 110c) to control the supply of the fluid (11) to the supply target (20); and
the controller (400, 410) is configured to control an operation of at least one of the first valve (300) or the second valve (310) according to the internal pressure of the storage tank (10);
wherein the controller (400, 410) is configured to open the first valve (300) until the internal pressure of the storage tank (10) reaches a preset set pressure so that the fluid (11) passes through the third line (130a, 130b, 130c),
when the internal pressure of the storage tank (10) reaches the set pressure, open the second valve (310) after closing the first valve (300) so that the fluid (11) is supplied to the supply target (20) through the first line (110, 110a, 110b, 110c), and
when the internal pressure of the storage tank (10) decreases below a predetermined level while the second valve (310) is open, allow the fluid (11) to be supplied to the supply target (20) through the second line (120, 120a, 120b, 120c).

12. The pressure buildup system (1) of any one of claims 9 to 11, wherein the pressure buildup system (1) comprises:
a first heat exchanger (200) formed at a location before the second line (120, 120a, 120b, 120c) is branched from the first line (110, 110a, 110b, 110c); and
a second heat exchanger (210) formed at a location before being connected to the supply target (20) in the second line (120, 120a, 120b, 120c),
so that a temperature of the fluid (11) passing through the first heat exchanger (200) or the second heat exchanger (210) increases.

## Patentansprüche

1. Druckaufbausystem (1) eines Speichertanks (10) für ein kryogenes Fluid (11), wobei das Druckaufbausystem (1) umfasst:
einen Lagertank (10), in dem kryogenes Fluid (11) gespeichert wird;
eine Auslassleitung (100), die mit einem unteren Teil des Speichertanks (10) in Verbindung steht, so dass das gespeicherte Fluid (11) fließt;
eine erste Leitung (110, 110a, 110b, 110c), die von der Auslassleitung (100) abzweigt und deren eines Ende mit einem oberen Teil des Speichertanks (10) verbunden ist, um einen Druckaufbau durch Schwerkraft zu bewirken;
eine zweite Leitung (120, 120a, 120b, 120c), die von der Auslassleitung (100) abzweigt und deren eines Ende mit einem Versorgungsziel (20) verbunden ist; und
eine dritte Leitung (130a, 130b, 130c), deren eines Ende von einem ersten Punkt der zweiten Leitung (120, 120a, 120b, 120c) abzweigt und deren anderes Ende so ausgebildet ist, dass es mit der zweiten Leitung (120, 120a, 120b, 120c) an einem zweiten Punkt außerhalb des Speichertanks (10) angeschlossen ist, nachdem ein Teil davon durch das in dem Speichertank (10) gespeicherte Fluid (11) hindurchgegangen ist, um einen Druckaufbau ohne Schwerkraft zu bewirken.

2. Druckaufbausystem (1) nach Anspruch 1, wobei das Druckaufbausystem (1) des Speichertanks (10) für kryogenes Fluid (11) eine Steuerung (400, 410) umfasst, die so konfiguriert ist, dass sie einen Strom des Fluids (11) in jeder Leitung entsprechend einem Innendruck des Speichertanks (10) steuert;
wobei die Steuerung (400, 410) so konfiguriert ist, dass sie das Fluid (11) durch die erste Leitung (110, 110a, 110b, 110c) fließen lässt, bis der Innendruck des Speichertanks (10) einen voreingestellten Solldruck erreicht, und
wenn der Innendruck des Speichertanks (10) den eingestellten Druck erreicht, das Fluid (11) so steuert, dass es über die zweite Leitung (120, 120a, 120b, 120c) oder die dritte Leitung (130a, 130b, 130c) dem Versorgungsziel (20) zugeführt wird.

3. Druckaufbausystem (1) nach Anspruch 2, wobei das Druckaufbausystem (1) des Speichertanks (10) für kryogenes Fluid (11) umfasst
ein erstes Ventil (300), das in der ersten Leitung (110, 110a, 110b, 110c) ausgebildet ist, um den Strom des Fluids (11) zur ersten Leitung (110, 110a, 110b, 110c) zu steuern; und
ein zweites Ventil (310), das in der zweiten Leitung (120, 120a, 120b, 120c) ausgebildet ist, um dem Strom des Fluids (11) zur zweiten Leitung (120, 120a, 120b, 120c) zu steuern; und
die Steuerung (400, 410) so konfiguriert ist, dass sie einen Betrieb von mindestens einem von dem ersten Ventil (300) oder dem zweiten Ventil (310) steuert;
wobei die Steuerung (400, 410) so konfiguriert ist, dass sie das erste Ventil (300) öffnet, bis der Innendruck des Speichertanks (10) einen voreingestellten Solldruck erreicht, so dass das Fluid (11) durch die erste Leitung (110, 110a, 110b, 110c) fließt,
wenn der Innendruck des Speichertanks (10) den eingestellten Druck erreicht, das zweite Ventil (310) nach dem Schließen des ersten Ventils (300) öffnet, so dass das Fluid (11) über die zweite Leitung (120, 120a, 120b, 120c) dem Versorgungsziel (20) zugeführt wird, und
wenn der Innendruck des Lagertanks (10) unter ein vorbestimmtes Niveau fällt, während das zweite Ventil (310) geöffnet ist, die Zufuhr des Fluids (11) zu dem Versorgungsziel (20) durch die dritte Leitung (130a, 130b, 130c) ermöglicht wird.

4. Druckaufbausystem (1) nach einem der Ansprüche 1 bis 3, wobei das Druckaufbausystem (1) des Speichertanks (10) für kryogenes Fluid (11) umfasst:
einen ersten Wärmetauscher (200), der in der ersten Leitung (110, 110a, 110b, 110c) ausgebildet ist;
einen zweiten Wärmetauscher (210), der an einer Stelle ausgebildet ist, bevor die dritte Leitung (130a, 130b, 130c) von der zweiten Leitung (120, 120a, 120b, 120c) abgezweigt wird; und
einen dritten Wärmetauscher (220), der an einer Stelle ausgebildet ist, bevor er mit dem Versorgungsziel (20) in der dritten Leitung (130a, 130b, 130c) verbunden wird,
so dass eine Temperatur des Fluids (11), das durch den ersten Wärmetauscher (200), den zweiten Wärmetauscher (210) oder den dritten Wärmetauscher (220) fließt, ansteigt.

5. Druckaufbausystem (1) eines Speichertanks (10) für ein kryogenes Fluid (11), wobei das Druckaufbausystem (1) umfasst:
einen Lagertank (10), in dem kryogenes Fluid (11) gespeichert wird;
eine Auslassleitung (100), die mit einem unteren Teil des Speichertanks (10) in Verbindung steht, so dass das gespeicherte Fluid (11) fließt;
eine erste Leitung (110, 110a, 110b, 110c), deren eines Ende mit der Auslassleitung (100) und deren anderes Ende mit einem Versorgungsziel (20) verbunden ist;
eine zweite Leitung (120, 120a, 120b, 120c), die von der ersten Leitung (110, 110a, 110b, 110c) an einem dritten Punkt abzweigt, um mit dem Inneren des Speichertanks (10) in Verbindung zu stehen, um einen Druckaufbau durch Schwerkraft zu bewirken; und
eine dritte Leitung (130a, 130b, 130c), die von der ersten Leitung (110, 110a, 110b, 110c) an einem vierten Punkt abzweigt und ein Ende aufweist, das so ausgebildet ist, dass es an einem fünften Punkt der ersten Leitung (110, 110a, 110b, 110c) außerhalb des Lagertanks (10) angeschlossen ist, nachdem ein Teil davon durch das in dem Lagertank (10) gespeicherte Fluid (11) hindurchgegangen ist, um einen Druckaufbau ohne Schwerkraft zu bewirken.

6. Druckaufbausystem (1) nach Anspruch 5, wobei das Druckaufbausystem (1) des Speichertanks (10) für kryogenes Fluid (11) umfasst:
eine Steuerung (400, 410), die so konfiguriert ist, dass sie einen Strom des Fluids (11) in jeder Leitung entsprechend einem Innendruck des Speichertanks (10) steuert;
wobei die Steuerung (400, 410) so konfiguriert ist, dass sie das Fluid (11) durch die zweite Leitung (120, 120a, 120b, 120c) strömen lässt, bis der Innendruck des Speichertanks (10) einen voreingestellten Solldruck erreicht, und
wenn der Innendruck des Speichertanks (10) den eingestellten Druck erreicht, einen Durchfluss zur zweiten Leitung (120, 120a, 120b, 120c) schließt und das Fluid (11) so steuert, dass es dem Versorgungsziel (20) durch die erste Leitung (110, 110a, 110b, 110c) oder die dritte Leitung (130a, 130b, 130c) zugeführt wird.

7. Druckaufbausystem (1) nach Anspruch 6, wobei das Druckaufbausystem (1) des Speichertanks (10) für kryogenes Fluid (11) umfasst:
ein erstes Ventil (300), das in der zweiten Leitung (120, 120a, 120b, 120c) ausgebildet ist, um den Strom des Fluids (11) zur zweiten Leitung (120, 120a, 120b, 120c) zu steuern; und
ein zweites Ventil (310), das an einer hinteren Endseite der ersten Leitung (110, 110a, 110b, 110c) ausgebildet ist, um den Strom des Fluids (11) zu der ersten Leitung (110, 110a, 110b, 110c) zu steuern; und
die Steuerung (400, 410) so konfiguriert ist, dass sie einen Betrieb von mindestens einem von dem ersten Ventil (300) oder dem zweiten Ventil (310) entsprechend dem Innendruck des Speichertanks (10) steuert;
wobei die Steuerung (400, 410) so konfiguriert ist, dass sie das erste Ventil (300) öffnet, bis der Innendruck des Speichertanks (10) einen voreingestellten Solldruck erreicht, so dass das Fluid (11) durch die zweite Leitung (120, 120a, 120b, 120c) fließt,
wenn der Innendruck des Speichertanks (10) den eingestellten Druck erreicht, das zweite Ventil (310) nach dem Schließen des ersten Ventils (300) öffnet, so dass das Fluid (11) durch die erste Leitung (110, 110a, 110b, 110c) zum Versorgungsziel (20) zugeführt wird, und
wenn der Innendruck des Lagertanks (10) unter ein vorbestimmtes Niveau sinkt, während das zweite Ventil (310) geöffnet ist, die Zufuhr des Fluids (11) zum Versorgungsziel (20) durch die dritte Leitung (130a, 130b, 130c) ermöglicht wird.

8. Druckaufbausystem (1) nach einem der Ansprüche 5 bis 7, wobei das Druckaufbausystem (1) des Speichertanks (10) für kryogenes Fluid (11) umfasst:
einen ersten Wärmetauscher (200), der an einer Stelle ausgebildet ist, bevor die zweite Leitung (120, 120a, 120b, 120c) oder die dritte Leitung (130a, 130b, 130c) von der ersten Leitung (110, 110a, 110b, 110c) abgezweigt wird; und
einen zweiten Wärmetauscher (210), der an einer Stelle ausgebildet ist, bevor die dritte Leitung (130a, 130b, 130c), die von der ersten Leitung (110, 110a, 110b, 110c) abgezweigt ist, wieder mit der ersten Leitung (110, 110a, 110b, 110c) verbunden wird,
so dass eine Temperatur des Fluids (11), das durch den ersten Wärmetauscher (200) oder den zweiten Wärmetauscher (210) fließt, ansteigt.

9. Druckaufbausystem (1) eines Speichertanks (10) für ein kryogenes Fluid (11), wobei das Druckaufbausystem (1) umfasst:
einen Lagertank (10), in dem kryogenes Fluid (11) gespeichert wird;
eine Auslassleitung (100), die mit einem unteren Teil des Speichertanks (10) in Verbindung steht, so dass das gespeicherte Fluid (11) fließt;
eine erste Leitung (110, 110a, 110b, 110c), deren eines Ende mit der Auslassleitung (100) und deren anderes Ende mit einem Versorgungsziel (20) verbunden ist;
eine zweite Leitung (120, 120a, 120b, 120c), die von der ersten Leitung (110, 110a, 110b, 110c) an einem sechsten Punkt abzweigt und deren eines Ende so ausgebildet ist, dass es an einem siebten Punkt der ersten Leitung (110, 110a, 110b, 110c) außerhalb des Lagertanks (10) angeschlossen ist, nachdem ein Teil davon durch das in dem Speichertank (10) gespeicherte Fluid (11) hindurchgegangen ist, um einen Druckaufbau ohne Schwerkraft zu bewirken; und
eine dritte Leitung (130a, 130b, 130c), die von der zweiten Leitung (120, 120a, 120b, 120c) an einem achten Punkt abzweigt, um mit dem Inneren des Lagertanks (10) in Verbindung zu stehen, um einen Druckaufbau durch Schwerkraft zu bewirken.

10. Druckaufbausystem (1) nach Anspruch 9, wobei das Druckaufbausystem (1) des Speichertanks (10) für kryogenes Fluid (11) umfasst:
eine Steuerung (400, 410), die so konfiguriert ist, dass sie einen Strom des Fluids (11) in jeder Leitung entsprechend einem Innendruck des Speichertanks (10) steuert;
wobei die Steuerung (400, 410) so konfiguriert ist, dass sie das Fluid (11) durch die dritte Leitung (120c, 130a, 130b, 130c) fließen lässt, bis der Innendruck des Speichertanks (10) einen voreingestellten Solldruck erreicht, und
wenn der Innendruck des Speichertanks (10) den eingestellten Druck erreicht, das Fluid (11) so steuert, dass es über die erste Leitung (110, 110a, 110b, 110c) oder die zweite Leitung (120, 120a, 120b, 120c) dem Versorgungsziel (20) zugeführt wird.

11. Druckaufbausystem (1) nach Anspruch 10, wobei das Druckaufbausystem (1) des Speichertanks (10) für kryogenes Fluid (11) umfasst:
ein erstes Ventil (300), das in der dritten Leitung (120c, 130a, 130b, 130c) ausgebildet ist, um den Strom des Fluids (11) zur dritten Leitung (120c, 130a, 130b, 130c) zu steuern; und
ein zweites Ventil (310), das an einer hinteren Endseite der ersten Leitung (110, 110a, 110b, 110c) ausgebildet ist, um die Zufuhr des Fluids (11) zu dem Versorgungsziel (20) zu steuern; und
die Steuerung (400, 410) so konfiguriert ist, dass sie einen Betrieb von mindestens einem von dem ersten Ventil (300) oder dem zweiten Ventil (310) entsprechend dem Innendruck des Speichertanks (10) steuert;
wobei die Steuerung (400, 410) so konfiguriert ist, dass sie das erste Ventil (300) öffnet, bis der Innendruck des Speichertanks (10) einen voreingestellten Solldruck erreicht, so dass das Fluid (11) durch die dritte Leitung (130a, 130b, 130c) fließt,
wenn der Innendruck des Speichertanks (10) den eingestellten Druck erreicht, das zweite Ventil (310) nach dem Schließen des ersten Ventils (300) öffnet, so dass das Fluid (11) durch die erste Leitung (110, 110a, 110b, 110c) dem Versorgungsziel (20) zugeführt wird, und
wenn der Innendruck des Lagertanks (10) unter ein vorbestimmtes Niveau abfällt, während das zweite Ventil (310) geöffnet ist, die Zufuhr des Fluids (11) zu dem Versorgungsziel (20) durch die zweite Leitung (120, 120a, 120b, 120c) ermöglicht wird.

12. Druckaufbausystem (1) nach einem der Ansprüche 9 bis 11, wobei das Druckaufbausystem (1) umfasst:
einen ersten Wärmetauscher (200), der an einer Stelle ausgebildet ist, bevor die zweite Leitung (120, 120a, 120b, 120c) von der ersten Leitung (110, 110a, 110b, 110c) abgezweigt wird; und
einen zweiten Wärmetauscher (210), der an einer Stelle ausgebildet ist, bevor er mit dem Versorgungsziel (20) in der zweiten Leitung (120, 120a, 120b, 120c) verbunden wird,
so dass die Temperatur des Fluids (11), das durch den ersten Wärmetauscher (200) oder den zweiten Wärmetauscher (210) fließt, ansteigt.

## Revendications

1. Un système d'accumulation de pression (1) d'un réservoir de stockage (10) de fluide cryogénique (11), le système d'accumulation de pression (1) comprenant :
un réservoir de stockage (10) dans lequel le fluide cryogénique (11) est stocké ;
une conduite de décharge (100) communiquant avec une partie inférieure du réservoir de stockage (10) de manière à ce que le fluide stocké (11) s'écoule ;
une première conduite (110, 110a, 110b, 110c) dérivée de la conduite de décharge (100) et dont l'une des extrémités est reliée à la partie supérieure du réservoir de stockage (10) afin d'effectuer une montée en pression par gravité ;
une deuxième conduite (120, 120a, 120b, 120c) dérivée de la conduite de décharge (100) et dont une extrémité est reliée à une cible d'alimentation (20) ; et
une troisième conduite (130a, 130b, 130c) dont une extrémité est dérivée d'un premier point de la deuxième conduite (120, 120a, 120b, 120c) et dont l'autre extrémité est formée pour être connectée à la deuxième conduite (120, 120a, 120b, 120c) en un deuxième point à l'extérieur du réservoir de stockage (10) après qu'une partie soit passée à l'intérieur du fluide (11) stocké dans le réservoir de stockage (10) afin d'effectuer une montée en pression non gravitaire.

2. Le système d'accumulation de pression (1) de la revendication 1, dans lequel le système d'accumulation de pression (1) du réservoir de stockage (10) de fluide cryogénique (11) comprend un contrôleur (400, 410) configuré pour contrôler un flux de fluide (11) dans chaque ligne en fonction d'une pression interne du réservoir de stockage (10) ;
dans lequel le contrôleur (400, 410) est configuré pour permettre au fluide (11) de passer par la première ligne (110, 110a, 110b, 110c) jusqu'à ce que la pression interne du réservoir de stockage (10) atteigne une pression de consigne prédéfinie, et
lorsque la pression interne du réservoir de stockage (10) atteint la pression de consigne, commander l'acheminement du fluide (11) vers la cible d'alimentation (20) par la deuxième conduite (120, 120a, 120b, 120c) ou la troisième conduite (130a, 130b, 130c).

3. Le système d'accumulation de pression (1) de la revendication 2, dans lequel le système d'accumulation de pression (1) du réservoir de stockage (10) de fluide cryogénique (11) comprend :
une première vanne (300) formée dans la première conduite (110, 110a, 110b, 110c) pour contrôler l'écoulement du fluide (11) dans la première conduite (110, 110a, 110b, 110c) ; et
une deuxième vanne (310) formée dans la deuxième ligne (120, 120a, 120b, 120c) pour contrôler le flux de fluide (11) vers la deuxième ligne (120, 120a, 120b, 120c) ; et
le contrôleur (400, 410) est configuré pour commander le fonctionnement d'au moins une de première vanne (300) ou de deuxième vanne (310) ;
dans lequel le contrôleur (400, 410) est configuré pour ouvrir la première vanne (300) jusqu'à ce que la pression interne du réservoir de stockage (10) atteigne une pression de consigne prédéfinie de sorte que le fluide (11) passe par la première conduite (110, 110a, 110b, 110c),
lorsque la pression interne du réservoir de stockage (10) atteint la pression de consigne, ouvrir la deuxième vanne (310) après avoir fermé la première vanne (300) afin que le fluide (11) soit fourni à la cible d'alimentation (20) par la deuxième conduite (120, 120a, 120b, 120c), et
lorsque la pression interne du réservoir de stockage (10) diminue en dessous d'un niveau prédéterminé alors que la deuxième vanne (310) est ouverte, permettre au fluide (11) d'être fourni à la cible d'approvisionnement (20) par la troisième conduite (130a, 130b, 130c).

4. Le système d'accumulation de pression (1) de l'une quelconque des revendications 1 à 3, dans lequel le système d'accumulation de pression (1) du réservoir de stockage (10) de fluide cryogénique (11) comprend :
un premier échangeur de chaleur (200) formé dans la première ligne (110, 110a, 110b, 110c) ;
un deuxième échangeur de chaleur (210) formé à un endroit avant que la troisième ligne (130a, 130b, 130c) ne soit ramifiée à partir de la deuxième ligne (120, 120a, 120b, 120c) ; et
un troisième échangeur de chaleur (220) formé à un endroit avant d'être connecté à la cible d'alimentation (20) dans la troisième conduite (130a, 130b, 130c),
de sorte que la température du fluide (11) traversant le premier échangeur de chaleur (200), le deuxième échangeur de chaleur (210) ou le troisième échangeur de chaleur (220) augmente.

5. Un système d'accumulation de pression (1) d'un réservoir de stockage (10) de fluide cryogénique (11) , le système d'accumulation de pression (1) comprenant :
un réservoir de stockage (10) dans lequel le fluide cryogénique (11) est stocké ;
une conduite de décharge (100) communiquant avec une partie inférieure du réservoir de stockage (10) de manière à ce que le fluide stocké (11) s'écoule ;
une première conduite (110, 110a, 110b, 110c) dont une extrémité est reliée à la conduite de décharge (100) et l'autre à une cible d'alimentation (20) ;
une deuxième conduite (120, 120a, 120b, 120c) dérivée de la première conduite (110, 110a, 110b, 110c) en un troisième point pour communiquer avec l'intérieur du réservoir de stockage (10) afin d'effectuer une montée en pression par gravité ; et
une troisième conduite (130a, 130b, 130c) dérivée de la première conduite (110, 110a, 110b, 110c) en un quatrième point et dont une extrémité est formée pour être connectée en un cinquième point de la première conduite (110, 110a, 110b, 110c) à l'extérieur du réservoir de stockage (10) après qu'une partie est passée à l'intérieur du fluide (11) stocké dans le réservoir de stockage (10) pour effectuer une montée en pression sans gravité.

6. Le système d'accumulation de pression (1) de la revendication 5, dans lequel le système d'accumulation de pression (1) du réservoir de stockage (10) de fluide cryogénique (11) comprend :
un contrôleur (400, 410) configuré pour contrôler le débit du fluide (11) dans chaque ligne en fonction de la pression interne du réservoir de stockage (10) ;
dans lequel le contrôleur (400, 410) est configuré pour permettre au fluide (11) de passer par la deuxième ligne (120, 120a, 120b, 120c) jusqu'à ce que la pression interne du réservoir de stockage (10) atteigne une pression de consigne prédéfinie, et
lorsque la pression interne du réservoir de stockage (10) atteint la pression de consigne, fermer un débit vers la deuxième conduite (120, 120a, 120b, 120c) et contrôler le fluide (11) pour qu'il soit fourni à la cible d'alimentation (20) par la première conduite (110, 110a, 110b, 110c) ou la troisième conduite (130a, 130b, 130c).

7. Le système d'accumulation de pression (1) de la revendication 6, dans lequel le système d'accumulation de pression (1) du réservoir de stockage (10) de fluide cryogénique (11) comprend :
une première vanne (300) formée dans la deuxième conduite (120, 120a, 120b, 120c) pour contrôler l'écoulement du fluide (11) dans la deuxième conduite (120, 120a, 120b, 120c) ; et
une deuxième vanne (310) formée à l'extrémité arrière de la première conduite (110, 110a, 110b, 110c) pour contrôler l'écoulement du fluide (11) dans la première conduite (110, 110a, 110b, 110c) ; et
le contrôleur (400, 410) est configuré pour commander le fonctionnement d'au moins une de première vanne (300) ou de deuxième vanne (310) en fonction de la pression interne du réservoir de stockage (10) ;
le contrôleur (400, 410) est configuré pour ouvrir la première vanne (300) jusqu'à ce que la pression interne du réservoir de stockage (10) atteigne une pression prédéfinie de sorte que le fluide (11) passe par la deuxième conduite (120, 120a, 120b, 120c),
lorsque la pression interne du réservoir de stockage (10) atteint la pression de consigne, ouvrir la deuxième vanne (310) après avoir fermé la première vanne (300) afin que le fluide (11) soit fourni à la cible d'alimentation (20) par la première conduite (110, 110a, 110b, 110c), et
lorsque la pression interne du réservoir de stockage (10) diminue en dessous d'un niveau prédéterminé alors que la deuxième vanne (310) est ouverte, permettre au fluide (11) d'être fourni à la cible d'alimentation (20) par la troisième conduite (130a, 130b, 130c).

8. Le système d'accumulation de pression (1) de l'une des revendications 5 à 7, dans lequel le système d'accumulation de pression (1) du réservoir de stockage (10) de fluide cryogénique (11) comprend :
un premier échangeur de chaleur (200) formé à un endroit avant que la deuxième ligne (120, 120a, 120b, 120c) ou la troisième ligne (130a, 130b, 130c) ne soit ramifiée à partir de la première ligne (110, 110a, 110b, 110c) ; et
un deuxième échangeur de chaleur (210) formé à un endroit avant que la troisième ligne (130a, 130b, 130c) dérivée de la première ligne (110, 110a, 110b, 110c) ne soit reconnectée à la première ligne (110, 110a, 110b, 110c),
de sorte que la température du fluide (11) traversant le premier échangeur de chaleur (200) ou le deuxième échangeur de chaleur (210) augmente.

9. Le système d'accumulation de pression (1) d'un réservoir de stockage (10) de fluide cryogénique (11), le système d'accumulation de pression (1) comprenant :
un réservoir de stockage (10) dans lequel le fluide cryogénique (11) est stocké ;
une conduite de décharge (100) communiquant avec une partie inférieure du réservoir de stockage (10) de manière à ce que le fluide stocké (11) s'écoule ;
une première conduite (110, 110a, 110b, 110c) dont une extrémité est reliée à la conduite de décharge (100) et l'autre à une cible d'alimentation (20) ;
une deuxième conduite (120, 120a, 120b, 120c) dérivée de la première conduite (110, 110a, 110b, 110c) en un sixième point et dont une extrémité est formée pour être connectée en un septième point de la première conduite (110, 110a, 110b, 110c) à l'extérieur du réservoir de stockage (10) après qu'une partie soit passée à l'intérieur du fluide (11) stocké dans le réservoir de stockage (10) afin de réaliser une accumulation de pression sans gravité ; et
une troisième conduite (130a, 130b, 130c) dérivée de la deuxième conduite (120, 120a, 120b, 120c) en un huitième point pour communiquer avec l'intérieur du réservoir de stockage (10) afin d'effectuer une montée en pression par gravité.

10. Le système d'accumulation de pression (1) de la revendication 9, dans lequel le système d'accumulation de pression (1) du réservoir de stockage (10) de fluide cryogénique (11) comprend :
un contrôleur (400, 410) configuré pour contrôler le débit du fluide (11) dans chaque ligne en fonction de la pression interne du réservoir de stockage (10) ;
dans lequel le contrôleur (400, 410) est configuré pour permettre au fluide (11) de passer par la troisième conduite (120c, 130a, 130b, 130c) jusqu'à ce que la pression interne du réservoir de stockage (10) atteigne une pression de consigne prédéfinie, et
lorsque la pression interne du réservoir de stockage (10) atteint la pression de consigne, contrôler le fluide (11) pour qu'il soit fourni à la cible d'alimentation (20) par la première conduite (110, 110a, 110b, 110c) ou la deuxième conduite (120, 120a, 120b, 120c).

11. Le système d'accumulation de pression (1) de la revendication 10, dans lequel le système d'accumulation de pression (1) du réservoir de stockage (10) de fluide cryogénique (11) comprend :
une première vanne (300) formée dans la troisième conduite (120c, 130a, 130b, 130c) pour contrôler l'écoulement du fluide (11) dans la troisième conduite (120c, 130a, 130b, 130c) ; et
une deuxième vanne (310) formée à l'extrémité arrière de la première conduite (110, 110a, 110b, 110c) pour contrôler l'alimentation en fluide (11) de la cible d'alimentation (20) ; et
le contrôleur (400, 410) est configuré pour commander le fonctionnement d'au moins une de première vanne (300) ou de deuxième vanne (310) en fonction de la pression interne du réservoir de stockage (10) ;
le contrôleur (400, 410) est configuré pour ouvrir la première vanne (300) jusqu'à ce que la pression interne du réservoir de stockage (10) atteigne une pression de consigne prédéfinie de sorte que le fluide (11) passe par la troisième conduite (130a, 130b, 130c),
lorsque la pression interne du réservoir de stockage (10) atteint la pression de consigne, ouvrir la deuxième vanne (310) après avoir fermé la première vanne (300) afin que le fluide (11) soit fourni à la cible d'alimentation (20) par la première conduite (110, 110a, 110b, 110c), et
lorsque la pression interne du réservoir de stockage (10) diminue en dessous d'un niveau prédéterminé alors que la deuxième vanne (310) est ouverte, permettre au fluide (11) d'être fourni à la cible d'approvisionnement (20) par la deuxième conduite (120, 120a, 120b, 120c).

12. Le système d'accumulation de pression (1) de l'une des revendications 9 à 11, dans lequel le système d'accumulation de pression (1) comprend :
un premier échangeur de chaleur (200) formé à un endroit avant que la deuxième ligne (120, 120a, 120b, 120c) ne soit dérivée de la première ligne (110, 110a, 110b, 110c) ; et
un deuxième échangeur de chaleur (210) formé à un endroit avant d'être connecté à la cible d'alimentation (20) dans la deuxième ligne (120, 120a, 120b, 120c),
de sorte que la température du fluide (11) traversant le premier échangeur de chaleur (200) ou le deuxième échangeur de chaleur (210) augmente.
